# EUROPEAN PATENT SPECIFICATION

(11) **EP 0 785 066 B1**
(45) Date of publication and mention of the grant of the patent: **28.04.2004**
(21) Application number: 97300276.9
(22) Date of filing: 17.01.1997
(51) Int. Cl.: B32B 27/32, B65D 65/40

(54) **Peelable heat seals and method for making same**
Abziehbares Heisssiegel und Verfahren zu dessen Herstellung
Elément thermoscellable détachable et méthode de production

(30) Priority: 19.01.1996 US 10233 P
(43) Date of publication of application: 23.07.1997
(73) Proprietor: CURWOOD, INC., Oshkosh, Wisconsin 54903-2968 (US)
(72) Inventor: Hergert, Bruce M., Butte Des Morts, Wisconsin 54927 (US); Keenan, Mark T., Appleton, Wisconsin 54915 (US); Mestetsky, Thomas S., St. Charles, Illinois 60174 (US)
(74) Representative: Matthews, Heather Clare

(56) References cited:
- WO-A-96/04861
- US-A- 4 125 985
- US-A- 4 194 622
- US-A- 5 324 555
- US-A- 5 516 583

## Description

### Introduction

This application relates to packaging with peelable heat seals between two sheets of packaging material and a method of forming a package with such seals in a manner which will provide a clean separation between the sheets when the latter are peeled apart. More particularly, the invention relates to a package with a clean peelable heat seal between a first sheet of fibrous spunbonded polyolefin, such as is sold under the registered trademark TYVEK by DuPont, and a polymeric thermoplastic second sheet. The invention has particular application to the packaging of medical supplies and instruments because the heat seal produced creates an interface that exhibits good seal integrity, provides a controlled peel strength, exhibits minimal fiber tear from the spunbonded polyolefin, and when peeled open, results in a visual whitening of the polymeric material in the heat seal area, thereby providing evidence of good initial seal integrity. Typical of the applications would involve medical packaging in various forms such as pouches, rigid packages or trays with lid stocks, or other flexible packaging types.

### Background of the Invention

Spunbonded polyolefin (sometimes referred to as olefin for brevity) sheets have been used for a number of years for various types of packaging. The sheets are formed of high density polyethylene fibers which are spun in continuous strands and bonded together with heat and pressure. Because sheets formed of this material are highly opaque, it is frequently desirable to form one side of a container or package of a transparent lamination, such as a composite of polyester and polyethylene, which is heat sealed to the spunbonded olefin sheet. In order to open the sealed package, the transparent sheet is peeled from the spunbonded olefin sheet. In the packaging of medical goods, it is essential that in opening the package, the seal between the opposing sheets separate cleanly with substantially no tearing or linting and without the production of strings which could affect the sterile condition of the medical goods contained in the package.

It has been particularly difficult to obtain a satisfactory peel seal between the spunbonded olefin first sheet and the preferably transparent second sheet of polymeric thermoplastic heat sealable material. Such a seal must be easy to open and highly reliable but it must provide an extremely low incidence of tearing and linting of the fibers, arid it is highly desirable that the seal, when opened, provide on the transparent second sheet a clear indication of the initial integrity of the seal.

Various attempts have been made to produce a seal which will part cleanly at the interface between a spunbonded olefin sheet and the transparent polymeric sheet. One such effort is set forth in US Patent No. 4,125,985 dated November 21, 1978 which attempts to provide a peel seal container or pouch with low incidence of tearing or linting. However, this process involves the pretreatment of the spunbonded olefin sheet by the application of a heated die in the shape of the peel seal desired. This process is difficult to control. Heat and pressure must be applied very carefully to get the desired effect and even when performed optimally it still results in fiber tear when the package is opened.

Other prior methods used to produce a peel seal between spunbonded olefin sheets and a sheet of synthetic polymeric thermoplastic heat sealable material have involved coating the spunbonded olefin sheet in order to provide a suitable sealing surface for the thermoplastic sheet. However, the spunbonded olefin material has uneven surface characteristics which tend to effect the sealing quality, and the coating of the spunbonded olefin material not only increases the cost but also changes the porosity characteristics relative to uncoated spunbonded polyolefin.

Another attempt to accomplish a satisfactory peel seal between a spunbonded olefin sheet and a polymeric thermoplastic heat sealable material, such as an oriented polyester, has been to apply a primer to the polyester and then coat the primed oriented polyester with a low density polyethylene. However, the seal produced is one having inconsistent peel characteristics and a narrow heat seal range. It also often results in fiber tear due to its narrow heat seal range.

Various suggestions (see US Patent No. 4,189,519) have been made for producing peelable heat seals but these have not been applied to a fibrous sheet material such as that formed of spunbonded olefin. Such sheets are generally designed to seal to themselves or very similar materials, not fibrous materials such as spunbonded polyolefin. Films that seal well to themselves tend to have a narrow range of heat seal temperatures when sealed to spunbonded polyolefin and they do not peel easily or cleanly when opened. It is well known in the art that at high levels such as 25% of polybutylene such materials seal to themselves with such small opening force as to be unacceptable to package even the lightest of articles.

### Summary of the Invention

According to one aspect of this invention there is provided a package including
a first package wall formed of spunbonded polyolefin, said first package wall having an inner surface and an outer surface;
a second package wall formed of a film laminate having an inner layer and an outer layer, said inner layer formed of a blend of polybutylene and one other constituent, said inner layer of said second package wall being peelably joined to said inner surface of said first package wall along the perimeter thereof so as to define a product receiving chamber in which a product can be sealed within said package.

According to a further aspect of this invention there is provided a method of forming a package comprising the steps of:
providing a first package wall formed of spunbonded polyolefin;
providing a second package wall having an outer layer and an inner sealant layer, said sealant layer including an inner layer formed of a blend of polybutylene and one other constituent;
placing said first package wall over said second package wall;
heat sealing said sealant layer of said second package wall to said first package wall along edges of said first and second package walls so as to define a product receiving chamber within said package in which a product can be enclosed within said package.

Thus, a package in accordance with this invention, includes a first package wall (which may also be referred to as sheet) of spunbonded polyolefin and a second package wall (which may also be referred to as sheet) of polymeric, thermoplastic, heat sealable material. It is preferable that the thermoplastic material be transparent. The package includes a peelable seal between the first and second package walls by means formed by heat and pressure. The second package wall is a lamination which can be accomplished by various means, one of which is to apply a primer to a polyester layer, then extrusion laminate that layer to a coextruded sealant using low density polyethylene (homopolymer). One coextruded layer of the sealant preferably is a low density polyethylene (homopolymer) and the other coextruded layer of the sealant preferably is a blend of an ethylene vinyl acetate copolymer of polyethylene (preferably on the order of 75% of the blend), and a polybutylene resin (preferably on the order of about 25% of the blend). The ethylene vinyl acetate copolymer is preferably a 2% vinyl acetate composition and the blend forms the outside surface of a coextruded sealant, i.e., the surface which is to be heat sealed to the spunbonded polyolefin sheet.

### Brief Description of the Drawings

Figure 1 is a cross-sectional view of a heat sealed portion of a package made in accordance with this invention showing the various layers of the heat seal between the first and second package walls of the package.
Figure 2 is a cross-sectional view of a package showing heat seals between the two package walls on the sides and a product, such as a sterile medical instrument, disposed within the package.

### Detailed Description of the Preferred Embodiment

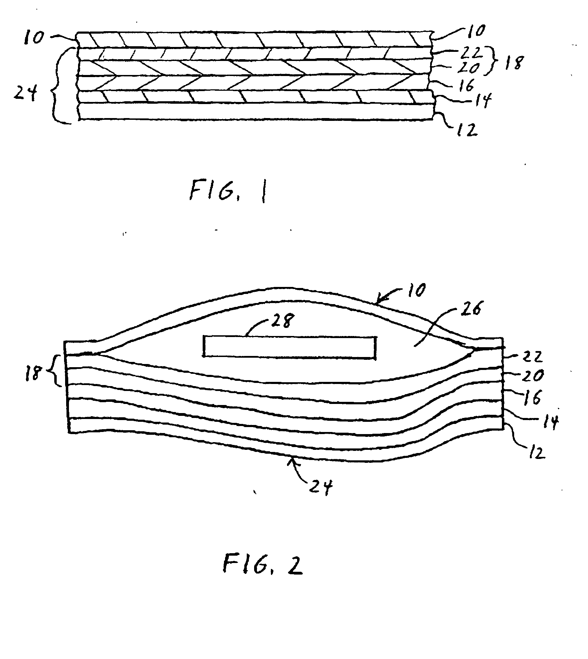

Figure 1 shows a portion of a package constructed in accordance with this invention in which there is a first package wall (or sheet) 10 formed of spunbonded polyolefin formed by spinning continuous strands of very fine interconnected fibers and then bonding them together with heat and pressure. The spunbonded polyolefin is a material such as sold by DuPont under the mark TYVEK. The second package wall (or sheet) 24 is a lamination of polymeric thermoplastic materials which is heat sealable on at least its inside surface and is preferably transparent. Outer layer 12 is preferably forty three to forty eight gauge oriented polyester film. It is contemplated that this layer 12 could be constructed of other materials such as polyethylene, polypropylene, polyamide nylon or other such materials.

Preferably, the outer layer 12 is treated on its inner surface with a suitable primer 14 such as a PEI primer, and then a low density polyethylene (homopolymer) 16 is used to extrusion laminate outer layer 12 to a coextruded sealant 18 approximately 1.5 mil in thickness, with approximately 1.3 mil of that film consisting of a low density polyethylene (homopolymer) layer 20 and a second layer 22, approximately 0.2 mil in thickness, forming an inner surface for heat sealing to the spunbonded polyolefin sheet. This second layer 22 of the sealant 18 is made up of a blend of a polybutylene resin and a copolymer of ethylene and vinyl acetate, with suitable amounts of slip and antiblock processing aides being added to give the sealant proper characteristics, as is well known in the art. It is preferred that the copolymer of the layer 22 be a 2% ethylene vinyl acetate copolymer of polyethylene and that this copolymer form about seventy five parts of the blend, with the polybutylene resin constituting the remaining twenty five parts of the blend which constitutes the approximately 0.2 mil inside surface layer 22 of the coextruded sealant 18. Layers 20 and 22 could also be polyethylene homopolymer based or utilize any of the copolymers well known in the art such as, for example, ethylene-acrylic acid (EAA), ionomers such as DuPont's Surlyn, ethylene a-olefin copolymer, ethylene methyl acrylate (EMA) or ethylene methacrylic acid (EMAA) copolymers. In addition to other copolymers and homopolymers, other polymeric materials could be employed as would be readily apparent to those skilled in the art.

In US Patent No. 4,189,519 there is a description of a process by means of which the second layer 22 of the coextruded sealant 18 may be prepared. The coextruded sealant 18 may be produced on a circular die blown film extruder.

One suitable process for laminating the transparent polyethylene sealant 18 to the polyester sheet 12 is described in US Patent No. 4,421,823.

After the extrusion lamination of the primed polymeric sheet 12 with the coextruded sealant 18, the second package wall 24 is brought into contact with the spunbonded polyolefin first package wall 10 around the perimeter of the package with the approximately 0.2 mil coextruded layer 22 of the sealant 18 (consisting of the blend of the polyethylene vinyl acetate copolymer and the polybutylene) in contact with the surface of the spunbonded polyolefin sheet. The two package walls 10 and 24 are then heat sealed at the edges in the usual manner at a temperature in the range of between 240 and 300 degrees Fahrenheit (115°C and 149°C). The temperature of the heat seal is important because if it is too cool a proper seal may not be obtained and if it is too hot the sealant bonds too well to the spunbonded polyolefin resulting in fiber tear when opened. For best results, the seal strength should be between one and three pounds per inch (17.8 and 53.5 kg per m).

A pouch or package formed in this manner is illustrated in Figure 2. A product receiving chamber 26 is defined between first package wall 10 and second package wall 24 which are sealed around three edges. A product 28 is inserted into the chamber 26 through the open edge. The product could be a medical instrument in need of sterilization or any of a wide variety of other medical instruments or products. The final seal is then made along the edge which was open.

Figure 2 illustrates a pouch or package wherein the heat seal is made face to face between the layer 22 and the layer 10. It would also be possible to have either the lower second package wall 24 extend beyond the side edge of the upper first package wall 10, or to have the upper first package wall 10 extend beyond the lower second package wall 24, and then fold the longer wall over on top of the edge of the shorter wall and create a seal therebetween by means of double-sided pressure sensitive tape as is well known in the art or some other adhesive or other seal mechanism. U.S. Patent No. 4,276,982 demonstrates one such type of closure. A chevron-shaped heat seal may be formed at the end of the package opposite from the end having the opening through which the product is inserted into the package. The end of the package having the chevron-shaped seal also includes gripping means formed by portions of the walls 10 and 24 that are not sealed to one another and that are located outwardly from the chevron-shaped heat seal. The gripping means facilitate the peeling apart of the walls 10 and 24 from one another to open the package along the heat seal which provides the "whitening" appearance as evidence of seal integrity. It is important to facilitate opening through a heat-sealed edge as opposed to an adhesively sealed edge. Only in this manner can one insure the appearance of "whitening" which demonstrates prior seal integrity.

When such a pouch or package is put in a sterilization device the sterilization medium easily permeates the layer of spunbonded polyolefin to perform the sterilization function.

The package or pouch of the present invention includes a peelable seal between the first package wall 10 of spunbonded polyolefin and the second package wall 24 of polymeric thermoplastic heat sealable material. The seal has high integrity with minimal fiber transfer from the spunbonded polyolefin. The seal formed in the package or pouch of the present invention, when opened to remove the product contained in the chamber 26, provides a uniform indication that the package had previously been sealed and a telltale sign of the integrity of the previous seal due to a "whitening" appearance along the portion of layer 22 that was previously sealed to layer 10.

Such a sign results because, unlike prior art approaches, the polybutylene acts to weaken the structural strength of the sealant layer, not its surface characteristics. In sealing to spunbonded polyolefin you do not want to achieve a fusion seal. To do so would result in melting of the spunbonded polyolefin which would destroy its strength and other beneficial physical properties. The seal of the package of the present invention causes the portions of the sealant layer 22 to flow in among the fibers of the spunbonded polyolefin thereby creating a strong but peelable bond. When the seal is peeled away to expose the contents for removal the sealant fails internally leaving the portions which have flowed in among the fibers in place. This can be confirmed with analytical tests such as surface infrared spectrometry which was used to confirm the presence of polybutylene and EVA in the seal area of the TYVEK spunbonded polyolefin after packages were opened. The spunbonded polyolefin fibers are stronger than the internal strength of the sealant layer so there is no resulting fiber tear. It is this internal sealant layer failure which produces the telltale "whitening" appearance on the layer 22 when it is peeled open. The present invention also produces a package having a uniform seal strength which is so important for medical packaging applications.

## Claims

1. A package including:
a first package wall formed of spunbonded polyolefin, said first package wall having an inner surface and an outer surface;
a second package wall formed of a film laminate having an inner layer and an outer layer, said inner layer formed of a blend of polybutylene and one other constituent, said inner layer of said second package wall being peelably joined to said inner surface of said first package wall along the perimeter thereof so as to define a product receiving chamber in which a product can be sealed within said package.

2. The package of claim 1 wherein said other constituent blended with said polybutylene is selected from ethylene vinyl acetate copolymer, ethylene acid copolymer and low density polyethylene.

3. The package of claim 1 wherein said other constituent blended with said polybutylene comprises an ethylene vinyl acetate copolymer of polyethylene.

4. The package of claim 3 wherein said ethylene vinyl acetate copolymer of polyethylene comprises 2% ethylene vinyl acetate.

5. The package of claim 1 wherein said inner layer of said second package wall is comprised of approximately 25% by weight of polybutylene and approximately 75% by weight of said one other constituent.

6. The package of claim 1 wherein said inner layer of said second package wall is laminated to a first layer of low density polyethylene, said inner layer and said first layer of low density polyethylene forming a sealant layer, said first layer of low density polyethylene being laminated to said outer layer.

7. The package of claim 6 including a second layer of low density polyethylene located between said sealant layer and said outer layer.

8. The package of claim 1 wherein said inner layer of said second package wall is heat sealed to said inner surface of said first package wall.

9. The package of claim 1 wherein said first package wall is heat sealed to said second package wall along a portion of its perimeter.

10. The package of claim 9 including a product receiving opening defined between a portion of said first package wall and said second package wall through which the product to be packaged can be inserted into said product receiving chamber.

11. The package of claim 10 including a heat seal formed between said first and second package walls to seal said product receiving opening thereby sealing said chamber of said package.

12. The package of claim 10 including means for sealing said first package wall to said second package wall at said product receiving opening to seal said product receiving opening.

13. The package of claim 12 wherein said means for sealing said product receiving opening comprises pressure sensitive tape.

14. The package of claim 1 in which said second package wall is transparent to allow for viewing the contents of the package.

15. The package of claim 9 wherein said heat seal is peelable to produce on said inner layer, in the area of the heat seal, a whitened appearance upon peeling.

16. A method of forming a package comprising the steps of:
providing a first package wall formed of spunbonded polyolefin;
providing a second package wall having an outer layer and an inner sealant layer, said sealant layer including an inner layer formed of a blend of polybutylene and one other constituent;
placing said first package wall over said second package wall;
heat sealing said sealant layer of said second package wall to said first package wall along edges of said first and second package walls so as to define a product receiving chamber within said package in which a product can be enclosed within said package.

17. The method of claim 16 wherein said heat sealing of said first package wall to said second package wall is performed at a temperature in the range between approximately 240°F and approximately 300°F.

18. The method of claim 16 wherein the step of providing said second package wall further comprises coextruding said inner layer of said sealant layer with a first layer of low density polyethylene and laminating said first layer of low density polyethylene to said outer layer of said second package wall.

19. The method of claim 18 wherein the step of providing said second package wall further comprises extrusion laminating said coextrusion of said inner layer and said first layer of low density polyethylene to said outer layer with a second layer of low density polyethylene.

20. The method of claim 16 including the further step of heat sealing said inner layer of said second package wall to said first package wall along a portion of the periphery thereof to thereby form a product receiving opening between a portion of said first package wall and said second package wall through which the product to be packaged can be inserted within said product receiving chamber.

21. The method of claim 20 wherein the heat sealing step causes portions of said inner layer of said second package wall to flow in among the fibers of spunbonded polyolefin of said first package wall thereby creating a strong but peelable bond in said heat seal area.

22. The method of claim 21 including the further step of providing means for sealing said product receiving opening on one of said first package wall and said second package wall.

23. The method of claim 21 including the step of sealing said product receiving opening to thereby seal said product receiving chamber.

## Patentansprüche

1. Verpackung, umfassend
- eine erste Verpackungswand, die aus spunbonded Polyolefin gebildet ist, wobei die erste Verpackungswand eine innere Oberfläche und eine äußere Oberfläche hat;
- eine zweite Verpackungswand, die aus einem Filmlaminat mit einer inneren Schicht und einer äußeren Schicht gebildet ist, wobei die innere Schicht aus einer Mischung aus Polybutylen und einem anderen Bestandteil gebildet ist, die innere Schicht der zweiten Verpackungswand abziehbar mit der inneren Oberfläche der ersten Verpackungswand entlang des Umfangs derselben verbunden ist, um so eine Produktaufnahmekammer zu definieren, in der ein Produkt in der Verpackung eingesiegelt werden kann.

2. Verpackung nach Anspruch 1, wobei der andere Bestandteil, der mit Polybutylen vermischt ist, aus Ethylenvinylacetat-Copolymer, Ethylensäure-Copolymer und Polyethylen niedriger Dichte ausgewählt ist.

3. Verpackung nach Anspruch 1, wobei der andere Bestandteil, der mit dem Polybutylen vermischt ist, ein Ethylenvinylacetat-Copolymer von Polyethylen umfasst.

4. Verpackung nach Anspruch 3, wobei das Ethylenvinylacetat-Copolymer von Polyethylen 2 % Ethylenvinylacetat umfasst.

5. Verpackung nach Anspruch 1, wobei die innere Schicht der zweiten Verpackungswand aus etwa 25 Gew.-% Polybutylen und etwa 75 Gew.-% des einen anderen Bestandteils besteht.

6. Verpackung nach Anspruch 1, wobei die innere Schicht der zweiten Verpackungswand auf eine erste Schicht aus Polyethylen niedriger Dichte laminiert ist; die innere Schicht und die erste Schicht aus Polyethylen niedriger Dichte eine Versiegelungsschicht bilden; die erste Schicht aus Polyethylen niedriger Dichte auf die äußere Schicht laminiert ist.

7. Verpackung nach Anspruch 1, die eine zweite Schicht aus Polyethylen niedriger Dichte, die zwischen der Versiegelungsschicht und der äußeren Schicht angeordnet ist, umfasst.

8. Verpackung nach Anspruch 1, wobei die innere Schicht der zweiten Verpackungswand an die innere Oberfläche der ersten Verpackungswand heißgesiegelt ist.

9. Verpackung nach Anspruch 1, wobei die erste Verpackungswand an die zweite Verpackungswand entlang eines Teils ihres Umfangs heißgesiegelt ist.

10. Verpackung nach Anspruch 9, die eine Produktaufnahmeöffnung umfasst, die zwischen einem Teil der ersten Verpackungswand und der zweiten Verpackungswand definiert ist und durch die das zu verpackende Produkt in die Produktaufnahmekammer eingeführt werden kann.

11. Verpackung nach Anspruch 10, die eine Heißversiegelung umfasst, welche zwischen der ersten Verpackungswand und der zweiten Verpackungswand ausgebildet ist, um die Produktaufnahmeöffnung zu versiegeln, wodurch die Kammer der Verpackung versiegelt wird.

12. Verpackung nach Anspruch 10, die Mittel zur Versiegelung der ersten Verpackungswand mit der zweiten Verpackungswand an der Produktaufnahmeöffnung umfasst, um die Produktaufnahmeöffnung zu versiegeln.

13. Verpackung nach Anspruch 12, wobei das Mittel zur Versiegelung der Produktaufnahmeöffnung ein Haftband umfasst.

14. Verpackung nach Anspruch 1, wobei die zweite Verpackungswand transparent ist, um eine Betrachtung der Inhalte der Verpackung zu ermöglichen.

15. Verpackung nach Anspruch 9, wobei die Heißversiegelung abziehbar ist, um an der inneren Schicht im Bereich der Heißversiegelung beim Abziehen ein geweißtes Aussehen zu erzeugen.

16. Verfahren zur Bildung einer Verpackung, das die folgenden Schritte umfasst:
- Bereitstellen einer ersten Verpackungswand, die aus spunbonded Polyolefin gebildet ist;
- Bereitstellen einer zweiten Verpackungswand mit einer äußeren Schicht und einer inneren Versiegelungsschicht, wobei die Versiegelungsschicht eine innere Schicht umfasst, die aus einer Mischung aus Polybutylen und einem anderen Bestandteil gebildet ist;
- Legen der ersten Verpackungswand über die zweite Verpackungswand;
- Heißsiegeln der Versiegelungsschicht der zweiten Verpackungswand an die erste Verpackungswand entlang der Ränder der ersten Verpackungswand und der zweiten Verpackungswand, um so eine Produktaufnahmekammer innerhalb der Verpackung zu definieren, in der ein Produkt in der Verpackung eingeschlossen werden kann.

17. Verfahren nach Anspruch 16, wobei die Heißsiegelung der ersten Verpackungswand an die zweite Verpackungswand bei einer Temperatur im Bereich zwischen etwa 240°F und etwa 300°F durchgeführt wird.

18. Verfahren nach Anspruch 16, wobei der Schritt der Bereitstellung der zweiten Verpackungswand außerdem ein Coextrudieren der inneren Schicht der Versiegelungsschicht mit einer ersten Schicht aus Polyethylen niedriger Dichte und Laminieren der ersten Schicht aus Polyethylen niedriger Dichte auf die äußere Schicht der zweiten Verpackungswand umfasst.

19. Verfahren nach Anspruch 18, wobei der Schritt des Bereitstellens der zweiten Verpackungswand außerdem Extrusionslaminieren der Coextrusion aus der inneren Schicht und der ersten Schicht aus Polyethylen niedriger Dichte auf die äußere Schicht mit einer zweiten Schicht aus Polyethylen niedriger Dichte umfasst.

20. Verfahren nach Anspruch 16, das den weiteren Schritt einer Heißversiegelung der inneren Schicht der zweiten Verpackungswand an die erste Verpackungswand entlang eines Teils des Umfangs derselben umfasst, um dadurch eine Produktaufnahmeöffnung zwischen einem Teil der ersten Verpackungswand und der zweiten Verpackungswand zu bilden, durch welche das zu verpackende Produkt in die Produktaufnahmekammer eingeführt werden kann.

21. Verfahren nach Anspruch 20, wobei der Heißsiegelschritt bewirkt, dass Teile der inneren Schicht der zweiten Verpackungswand zwischen die Fasern des spunbonded Polyolefins der ersten Verpackungswand fließen, um dadurch eine starke, aber abziehbare Bindung im Heißsiegelbereich zu schaffen.

22. Verfahren nach Anspruch 21, das den weiteren Schritt der Bereitstellung eines Mittels zur Versiegelung der Produktaufnahmeöffnung an einer, der ersten Verpackungswand oder der zweiten Verpackungswand, umfasst.

23. Verfahren nach Anspruch 21, das den Schritt einer Versiegelung der Produktaufnahmeöffnung umfasst, um dadurch die Produktaufnahmekammer zu versiegeln.

## Revendications

1. Emballage comportant :
une première paroi d'emballage formée d'une polyoléfine filée-liée, ladite première paroi d'emballage ayant une surface intérieure et une surface extérieure,
une seconde paroi d'emballage formée d'un film stratifié ayant une couche intérieure et une couche extérieure, ladite couche intérieure étant formée d'un mélange de polybutylène et d'un autre constituant, ladite couche intérieure de la seconde paroi d'emballage étant fixée de manière pelable sur ladite surface intérieure de ladite première paroi d'emballage le long du périmètre de celle-ci de manière à définir une chambre de réception de produit dans laquelle un produit peut être renfermé de manière étanche dans ledit emballage.

2. Emballage selon la revendication 1, dans lequel ledit autre constituant mélangé audit polybutylène est sélectionné parmi un copolymère d'éthylène-acétate de vinyle, un copolymère d'éthylène-acide et un polyéthylène à faible densité.

3. Emballage selon la revendication 1, dans lequel ledit autre constituant mélangé audit polybutylène comprend un copolymère d'éthylène-acétate de vinyle de polyéthylène.

4. Emballage selon la revendication 3, dans lequel ledit copolymère d'éthylène-acétate de vinyle de polyéthylène comprend 2 % d'éthylène-acétate de vinyle.

5. Emballage selon la revendication 1, dans lequel ladite couche intérieure de ladite seconde paroi d'emballage est composée d'approximativement 25 % en poids de polybutylène et d'approximativement 75 % en poids dudit autre constituant.

6. Emballage selon la revendication 1, dans lequel ladite couche intérieure de ladite seconde paroi d'emballage est stratifiée sur une première couche de polyéthylène à faible densité, ladite couche intérieure et ladite première couche de polyéthylène à faible densité formant une couche d'étanchéification, ladite première couche de polyéthylène à faible densité étant laminée sur ladite couche extérieure.

7. Emballage selon la revendication 6, comportant une seconde couche de polyéthylène à faible densité située entre ladite couche d'étanchéification et ladite couche extérieure.

8. Emballage selon la revendication 1, dans lequel ladite couche intérieure de ladite seconde paroi d'emballage est scellée thermiquement à ladite surface intérieure de la première paroi d'emballage.

9. Emballage selon la revendication 1, dans lequel ladite première paroi d'emballage est scellée thermiquement à ladite seconde paroi d'emballage le long d'une partie de son périmètre.

10. Emballage selon la revendication 9, comportant une ouverture de réception de produit définie entre une partie de ladite première paroi d'emballage et de ladite seconde paroi d'emballage à travers laquelle le produit à emballer peut être inséré dans ladite chambre de réception de produit.

11. Emballage selon la revendication 10, comportant un joint thermique formé entre lesdites première et seconde parois d'emballage pour étanchéifier ladite ouverture de réception de produit de manière à étanchéifier ladite chambre dudit emballage.

12. Emballage selon la revendication 10, comportant des moyens pour sceller ladite première paroi d'emballage à ladite seconde paroi d'emballage au niveau de ladite ouverture de réception de produit pour étanchéifier ladite ouverture de réception de produit.

13. Emballage selon la revendication 12, dans lequel lesdits moyens pour étanchéifier ladite ouverture de réception de produit comportent une bande sensible à la pression.

14. Emballage selon la revendication 1, dans lequel ladite seconde paroi d'emballage est transparente pour permettre d'observer le contenu de l'emballage.

15. Emballage selon la revendication 9, dans lequel ledit joint thermique peut être pelé pour produire sur ladite couche intérieure, dans la zone du joint thermique, un aspect blanchi lors du pelage.

16. Procédé pour former un emballage comportant les étapes consistant à :
fournir une première paroi d'emballage formée d'une polyoléfine filée―liée,
fournir une seconde paroi d'emballage ayant une couche extérieure et une couche d'étanchéification intérieure, ladite couche d'étanchéification incluant une couche intérieure formée d'un mélange de polybutylène et d'un autre constituant,
placer ladite première paroi d'emballage sur ladite seconde paroi d'emballage,
sceller thermiquement ladite couche d'étanchéification de ladite seconde paroi d'emballage à ladite première paroi d'emballage le long de bords desdites première et seconde parois d'emballage de manière à définir une chambre de réception de produit dans ledit emballage dans laquelle un produit peut être enfermé au sein dudit emballage.

17. Procédé selon la revendication 16, dans lequel ledit scellage thermique de ladite première paroi d'emballage à ladite seconde paroi d'emballage est effectué à une température dans la plage comprise entre approximativement 240°F et approximativement 300°F.

18. Procédé selon la revendication 16, dans lequel l'étape consistant à fournir ladite seconde paroi d'emballage comporte de plus la coextrusion de ladite couche intérieure de ladite couche d'étanchéification avec une première couche de polyéthylène à faible densité et la stratification de ladite première couche de polyéthylène à faible densité sur ladite couche extérieure de ladite seconde paroi d'emballage.

19. Procédé selon la revendication 18, dans lequel l'étape consistant à fournir ladite seconde paroi d'emballage comporte de plus la stratification par extrusion de ladite coextrusion constituée de ladite couche intérieure et de ladite première couche de polyéthylène à faible densité sur ladite couche extérieure à l'aide d'une seconde couche de polyéthylène à faible densité.

20. Procédé selon la revendication 16, comportant l'étape supplémentaire consistant à sceller thermiquement ladite couche intérieure de ladite seconde paroi d'emballage à ladite première paroi d'emballage le long d'une partie de la périphérie de celle-ci de manière à former une ouverture de réception de produit entre une partie de ladite première paroi d'emballage et de ladite seconde paroi d'emballage à travers laquelle le produit à emballer peut être inséré dans ladite chambre de réception de produit.

21. Procédé selon la revendication 20, dans lequel ladite étape de scellage thermique amène des parties de ladite couche intérieure de ladite seconde paroi d'emballage à s'écouler parmi les fibres de polyoléfine filée-liée de ladite première paroi d'emballage de manière à créer une liaison forte mais pelable dans ladite zone de joint thermique.

22. Procédé selon la revendication 21, incluant l'étape supplémentaire consistant à fournir des moyens pour sceller ladite ouverture de réception de produit sur ladite première paroi d'emballage ou ladite seconde paroi d'emballage.

23. Procédé selon la revendication 21, incluant l'étape consistant à sceller ladite ouverture de réception de produit de manière à étanchéifier ladite chambre de réception de produit.
